# EUROPEAN PATENT APPLICATION

(11) **EP 4 663 392 A1**
(43) Date of publication of application: **17.12.2025**
(21) Application number: 23921385.3
(22) Date of filing: 25.12.2023
(51) Int. Cl.: B29C 70/34, B29C 70/54

(54) **MOLDED BODY AND METHOD FOR PRODUCING MOLDED BODY**

(30) Priority: 09.02.2023 JP 2023018077
(71) Applicant: MITSUBISHI GAS CHEMICAL COMPANY, INC., Chiyoda-ku Tokyo 100-8324 (JP)
(72) Inventor: MATSUMOTO, Nobuhiko, Hiratsuka-shi, Kanagawa 254-0016 (JP); MITADERA, Jun, Tokyo 100-8324 (JP); ITO, Keisuke, Hiratsuka-shi, Kanagawa 254-0016 (JP)
(74) Representative: Vossius & Partner Patentanwälte Rechtsanwälte mbB
(86) International application number: PCT/JP2023/046351
(87) International publication number: WO 2024/166567

(57) **Abstract**

Provided are a molded body and a method for producing a molded body. Disclosed is a molded body of a prepreg including a resin and reinforcing fibers. The molded body includes a region B, 50% or more of the region B being occupies by a reinforcing fiber A, which is one of the reinforcing fibers, has a cross section present on a surface of the molded body, and, when a cross-sectional area a1 of the reinforcing fiber A on the surface of the molded body and an average cross-sectional area a2 of the reinforcing fiber A are compared, satisfies a1 > a2. The region B occupies 10% or more of a surface area of the molded body.

## Description

### Technical Field

The present invention relates to a molded body and a method for producing a molded body. In particular, the present invention relates to a molded body of a prepreg containing a resin and reinforcing fibers, and a method for producing the molded body.

### Background Art

A molded body containing a resin and reinforcing fibers has been developed as a reinforced resin molded body. For example, Patent Document 1 discloses a method for producing a composite molded body by shaping a continuous fiber-reinforced thermoplastic resin sheet including continuous fibers oriented in one direction and a thermoplastic resin composition B into a three-dimensional shape in an injection molding mold and integrating the continuous fiber-reinforced thermoplastic resin sheet with a thermoplastic resin composition A. The production method is characterized in that the continuous fiber-reinforced thermoplastic resin sheet has a cut.

On the other hand, in recent years, such a molded body containing a resin and reinforcing fibers is often required to have appearance design.

### Citation List

### Patent Document

Patent Document 1: JP 2022-135981 A

### Summary of Invention

### Technical Problem

When a pattern is imparted to a molded body of a resin and reinforcing fibers, a method of leaving arrangement in appearance, such as a weave pattern or a braid pattern of the reinforcing fibers, and random distribution of the reinforcing fibers, has been the mainstream. In particular, there are Nishijin-ori (Nishijin weave) and the like that exhibit a complex and dense appearance, and all have a continuous pattern. However, in order to impart rarity and the like to the molded body, a molded body to which further design is imparted by the reinforcing fibers is required. Even if the design is imparted, the rarity is deteriorated when the surface is rough, for example, a large number of reinforcing fibers protruding from the surface.
An object of the present invention is to solve such problems and provide a molded body containing a resin and reinforcing fibers and having excellent design and a smooth surface, and a method for producing a molded body.

### Solution to Problem

As a result of studies conducted by the present inventor(s) to solve the above-described issues, those issues have been solved by means described below.
<1> A molded body of a prepreg containing:
   a resin; and
   reinforcing fibers,
   in which the molded body includes a region B, 50% or more of the region B being occupied by a reinforcing fiber A, the reinforcing fiber A being one of the reinforcing fiber and having a cross section present on a surface of the molded body, when a cross-sectional area a1 of the reinforcing fiber A on the surface of the molded body and an average cross-sectional area a2 of the reinforcing fiber A are compared, the reinforcing fiber A satisfying a1 > a2, and the region B occupies 10% or more of a surface area of the molded body.
<2> The molded body according to <1>, in which the resin includes a thermoplastic resin.
<3> The molded body according to <1> or <2>, in which the resin satisfies at least one of a melting point of 150°C or higher and 330°C or lower, and a glass transition temperature of 100°C or higher.
<4> The molded body according to any one of <1> to <3>, further including a metal film C, in which a part of the metal film C is present on the surface of the molded body.
<5> The molded body according to any one of <1> to <4>, further including a colored resin film D, in which a part of the colored resin film D is present on the surface of the molded body.
<6> The molded body according to any one of <1> to <5>, in which a proportion of the reinforcing fibers in the prepreg is from 40 to 80 vol%.
<7> The molded body according to any one of <1> to <6>, in which a difference between a refractive index of the resin and a refractive index of the reinforcing fiber at a wavelength of 589 nm is 0.05 or more.
<8> The molded body according to any one of <1> to <7>, in which a difference between the cross-sectional area a1 and the cross-sectional area a2 in the region B of the reinforcing fiber A is 5 µm² or more.
<9> The molded body according to any one of <1> to <8>, in which the reinforcing fibers constituting the prepreg include a tailored fiber placement processing material and/or a woven fabric.
<10> The molded body according to any one of <1> to <9>, in which the region B occupies from 20 to 80% of the surface area of the molded body.
<11> A method for producing a molded body, the method including cutting a heated-and-pressurized body obtained by stacking 2 or more plies of a prepreg containing a resin and reinforcing fibers and heating and pressurizing the prepreg,
   in which the cutting is performed in such a way that the molded body includes a region B, 50% or more of the region B being occupied by a reinforcing fiber A, the reinforcing fiber A being of the reinforcing fibers and having a cross section present on a surface of the molded body, when a cross-sectional area a1 of the reinforcing fiber A on the surface of the molded body and an average cross-sectional area a2 of the reinforcing fiber A are compared, the reinforcing fiber A satisfying a1 > a2, and the region B occupies 10% or more of a surface area of the molded body.
<12> The method for producing a molded body according to <11>, in which the cutting is performed using a five-axis processing machine.
<13> The method for producing a molded body according to <11> or <12>, in which a cutting angle θ at the time of performing the cutting is from 3 to 40° with respect to a reference surface.
<14> The method for producing a molded body according to any one of <11> to <13>, in which a maximum cutting temperature at the time of performing the cutting is from 50 to 100°C.
<15> The method for producing a molded body according to any one of <11> to <14>, in which the molded body is the molded body according to any one of <1> to <10>.

### Advantageous Effects of Invention

According to the present invention, it is possible to provide a molded body containing a resin and reinforcing fibers and having excellent design and a smooth surface, and a method for producing a molded body.

### Brief Description of Drawings

FIG. 1 is a schematic view showing an example of a method for producing a molded body of the present embodiment.
FIG. 2 is a schematic view for explaining a reinforcing fiber A in the present embodiment whose cross section is present on a surface of the molded body, a cross-sectional area a1 on the surface of the molded body, and an average cross-sectional area a2 of the reinforcing fiber A.
FIG. 3 is a schematic view of an example of a pattern of the molded body.
FIG. 4 is a schematic view of another example of the pattern of the molded body.
FIG. 5 is a schematic view for explaining a cutting angle in the present embodiment.
FIG. 6 is a photograph of the molded body molded in Example 1.
FIG. 7 is a photograph of the molded body molded in Example 2.
FIG. 8 is a photograph of the molded body molded in Example 3.

### Description of Embodiments

Embodiments for performing the present invention (hereinafter referred to simply as "the present embodiment") will be described in detail. The present embodiment described below is an example for describing the present invention, and the present invention is not limited to the present embodiment.

In the present specification, numerical values described before and after the term "to" are respectively the lower limit and the upper limit of a range including the numerical values.

In the present specification, various physical property values and characteristic values are those at 23°C unless otherwise noted.

The term "step" as used herein includes not only an independent step but also a step that cannot be clearly distinguished from other steps as long as an intended action of the step is achieved.

When the measurement methods or the like described in the standards found in the present specification vary by year, the measurement methods or the like are based on the standards as of January 1, 2023, unless otherwise stated.

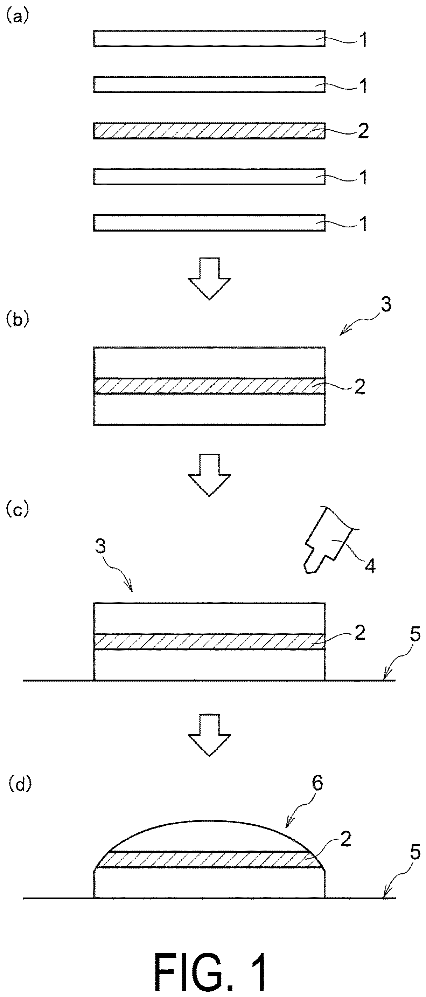

FIGS. 1 to 4 are each a schematic view, and the scale and the like may not match an actual scale.

A molded body of the present embodiment is a molded body of a prepreg containing a resin and reinforcing fibers, and the molded body is characterized in that the molded body includes a region B, 50% or more of the region B being occupied by a reinforcing fiber A, which is one of the reinforcing fibers, has a cross section present on a surface of the molded body, and, when a cross-sectional area a1 of the reinforcing fiber A on the surface of the molded body and an average cross-sectional area a2 of the reinforcing fiber A are compared, satisfies a1 > a2, and the region B occupies 10% or more of a surface area of the molded body. The molded body having such configuration has excellent design and a smooth surface.

First, with reference to FIGS. 1 to 4, the configuration of the molded body will be described along with the description of the method for producing the molded body of the present embodiment. It goes without saying that the method for producing a molded body and the molded body of the present embodiment are not limited to FIGS. 1 to 4.

FIG. 1 is a schematic view showing an example of the method for producing the molded body of the present embodiment. In FIG. 1(a), reference numeral 1 denotes a prepreg containing a resin and reinforcing fibers, and reference numeral 2 denotes an additional film. In FIG. 1(a), a plurality of the prepregs 1 may be the same as or different from each other. The number of prepreg layers is determined by a desired size of the molded body and the like, and is preferably 2 plies or more, more preferably 25 plies or more, and is preferably 100 plies or less, more preferably 75 plies or less. In addition, in the present embodiment, as shown in FIG. 1(a), the additional film 2 may be included between the prepregs 1. The additional film 2 is a metal film C or a colored resin layer D, and further imparts design to the resulting molded body. The number of the additional film 2 is appropriately determined depending on the pattern, and may be one or two or more. Only one type of the additional film 2 may be used alone, or two or more types may be used in combination.

Materials (1, 2) shown in FIG. 1(a) is heated and pressurized to form a heated-and-pressurized body 3 (b). The heated-and-pressurized body usually has a rectangular parallelepiped shape (block shape). A heating temperature at the time of molding the heated-and-pressurized body is preferably a glass transition temperature of the resin plus (from 40 to 200)°C or a melting point of the resin plus (from 10 to 100)°C. Pressure in molding the heated-and-pressurized body is preferably from 0.1 to 10 MPa.

A heated-and-pressurized body 3 is preferably molded so as not to contain as few voids as possible.

The present embodiment includes cutting the heated-and-pressurized body 3 (FIG. 1(c)). In the cutting of the heated-and-pressurized body, cutting is preferably performed by rotating a cutting machine 4. In particular, when the heated-and-pressurized body 3 is cut, the cross section of the reinforcing fiber is cut into various shapes on a surface of a cut surface by adjusting a cutting angle, and a beautiful pattern is exhibited. The cutting is preferably performed using a five-axis processing machine. The five-axis processing machine is a processing machine in which two rotary-tilt axes are added to three linear axes XYZ. The five-axis processing machine is roughly classified into three types: a table type, a spindle type, and a hybrid type. Reference numeral 5 shown in FIG. 1(c) denotes a reference surface at the time of cutting. The reference surface at the time of cutting is, for example, a table surface when cutting is performed by a table-type five-axis processing machine, and is a surface having the largest area of the obtained molded body among surfaces including a spindle when cutting is performed by a spindle-type five-axis processing machine. In the case of the hybrid type, the reference surface is a table surface. When a processing machine other than the above processing machine is used, the obtained molded body is placed on a horizontal plane in the most stable state and the horizontal plane is used as the reference surface.

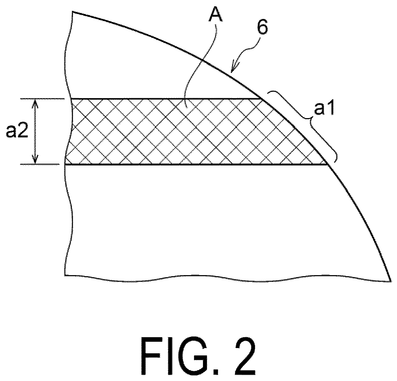

In the present embodiment, cutting is performed such that the molded body includes a region B, 50% or more of the region B being occupied by a reinforcing fiber A, which is one of the reinforcing fibers, has a cross section present on a surface of the molded body, and, when a cross-sectional area a1 of the reinforcing fiber A on the surface of the molded body and an average cross-sectional area a2 of the reinforcing fiber A are compared, satisfies a1 > a2, and the region B is 10% or more of the surface area of the molded body. Here, the reinforcing fiber A, which has a cross section present on the surface of the molded body, the cross-sectional area a1 of the reinforcing fiber A on the surface of the molded body, and the average cross-sectional area a2 of the reinforcing fiber A will be described with reference to FIG. 2.

FIG. 2 is an enlarged schematic view showing a part of the molded body (cut molded body) of the present embodiment, in which reference numeral 6 denotes the molded body, and A shows a reinforcing fiber that has a cross section present on the surface of the molded body. That is, a reinforcing fiber that is contained in the molded body 6 but does not have a cross section present on the surface of the molded body does not correspond to the reinforcing fiber A.

When the heated-and-pressurized body is cut, a cross section of the reinforcing fiber A appears on the surface of the molded body. When cutting is performed at an angle, the cross-sectional area a1 of the cut cross section is larger than the cross-sectional area a2 of a cross section obtained by cutting the reinforcing fiber A in a direction perpendicular to a fiber length direction (usually, the average cross-sectional area of the reinforcing fiber A) (a1 > a2). By cutting the cross section of the reinforcing fiber A in this manner, a pattern of various shapes can be imparted to the surface of the molded body 6 by the cross section a1 of the reinforcing fiber A. Such a pattern is a pattern that cannot be imparted by a molded body produced by a mold such as an injection-molded body, and it is possible to impart an additional value such as scarcity to the molded body 6.

Here, cutting at an angle means that cutting is usually performed at an angle other than 90° with respect to the reference surface at the time of cutting.

When a cut surface is polished using an extremely fine polishing agent after cutting, the reinforcing fiber A is not broken, and the cross-sectional area a1 of the reinforcing fiber A can be increased. As a particle diameter of the polishing agent, those having a D50 of from 0.1 µm to 2 µm are exemplified.

Back to FIG. 1, in the present embodiment, as described above, the additional film 2 may be included between the prepregs 1 (FIG. 1(a)). By including the additional film 2, a pattern derived from the additional film 2 can also be imparted to the surface of the molded body 6 after cutting shown in FIG. 1(d). As a result, a molded body with even better design is obtained.

In the present embodiment, as described above, the molded body includes a region B, 50% or more of the region B being occupied by a reinforcing fiber A, which is present on the surface of the molded body and satisfies a1 > a2 when the cross-sectional area a1 of the reinforcing fiber A on the surface of the molded body and the average cross-sectional area a2 of the reinforcing fiber A are compared, and the region B is preferably 10% or more of the surface area of the molded body.

Here, the region B is determined by the following method. More specifically, the region B is determined according to the description of the examples below.

First, for the surface of the molded body 6, the cross-sectional area of the reinforcing fiber A observed on the surface is measured for each surface area of 10000 µm² of the molded body. At this time, the cross-sectional area of 100 reinforcing fiber A was measured for each surface area of 10000 µm² of the molded body. A region where 50% or more of the measured cross-sectional area a1 of the reinforcing fiber A is larger than the average cross-sectional area a2 of the reinforcing fiber A is defined as the region B. In the molded body 6 in FIG. 1(d), a dome-shaped portion of the molded body 6 placed on the reference surface 5 of the cutting machine (not shown) corresponds to the region B. The region B is usually a portion cut at an angle.

The region B is preferably 20% or more, more preferably 30% or more, still more preferably 40% or more, and even more preferably 80% of the surface area of the molded body. This is because it is economical to provide the region B only in a visually recognizable portion since the molded body is usually used by being joined or coupled to some other member. By setting the proportion of the region B to a certain value or more, the design can be further enhanced.

In the region B, it is ideal that all the cross-sectional areas of the cross sections of the reinforcing fiber A are larger than the average cross-sectional area a2 of the reinforcing fiber A; however, there may be a portion having a cross section smaller than the average cross-sectional area a2 of the reinforcing fiber A. In the present embodiment, a proportion of the reinforcing fibers A satisfying a1 > a2 in the region B is preferably 60% or more, more preferably 70% or more of the cross sections of the reinforcing fibers A in the region B, and it is preferable that the cross sections of all the reinforcing fibers A satisfy a1 > a2 (100% or less).

The cross-sectional area a1 of the reinforcing fiber A present on the surface of the molded body on the surface of the molded body is preferably 51 µm² or more, more preferably 55 µm² or more, still more preferably 60 µm² or more, and preferably 200 µm² or less, more preferably 100 µm² or less, and may be 70 µm² or less, in terms of an average value of the cross-sectional area a1 included in the region B.

On the other hand, the average cross-sectional area a2 of the reinforcing fiber A is preferably 20 µm² or more, more preferably 30 µm² or more, still more preferably 40 µm² or more, and is preferably 100 µm² or less, more preferably 60 µm² or less.

In addition, a difference between the cross-sectional area a1 (average value) and the cross-sectional area a2 of the reinforcing fiber A in the region B is preferably 5 µm² or more, more preferably 7 µm² or more, and still more preferably 10 µm² or more, and is preferably 200 µm² or less, and more preferably 150 µm² or less, and the difference may be 100 µm² or less, 80 µm² or less, 50 µm² or less, or 20 µm² or less depending on the application and the like.

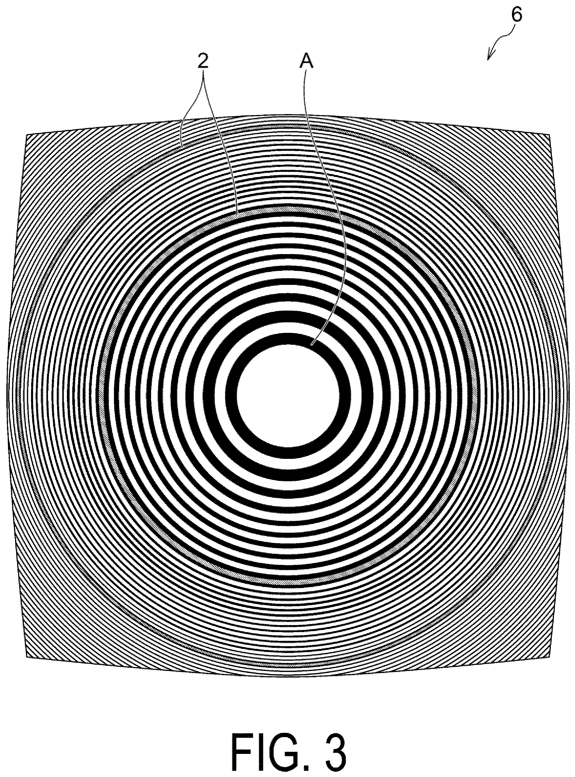

FIG. 3 shows a schematic view of an example of the pattern of the molded body of the present embodiment. FIG. 3 is a view of the cut surface of the molded body as viewed from a direction perpendicular to the reference surface. In FIG. 3, reference numeral 6 denotes a molded body, in a concentric circle, reference numeral A denotes a cross section 2a derived from the reinforcing fiber A, and reference numeral 2 denotes a cross section derived from the additional film 2. As shown in FIG. 3, by appropriately adjusting the cutting angle, a complicated pattern can be expressed by the cross section 2a derived from the reinforcing fiber A, a portion derived from the resin, and a portion derived from the additional film 2.

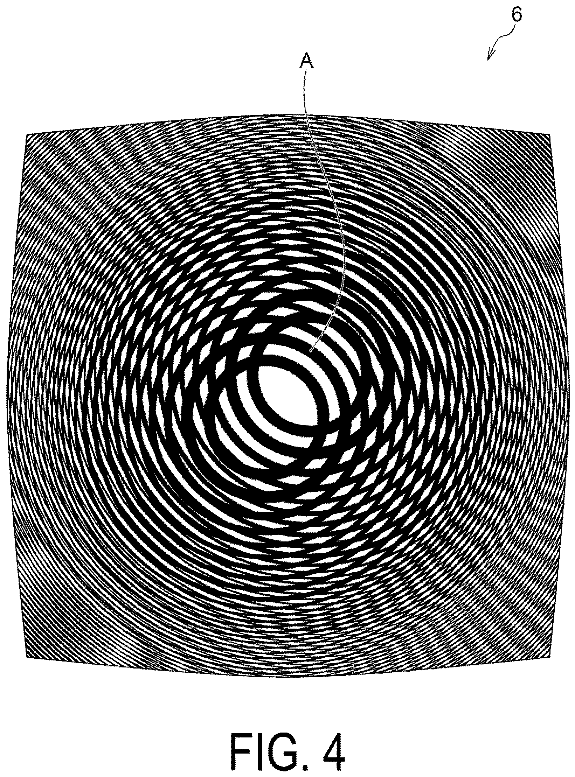

FIG. 4 shows a schematic view of another example of the pattern of the molded body of the present embodiment. FIG. 4 is a view of the cut surface of the molded body as viewed from the direction perpendicular to the reference surface. In FIG. 4, two concentric circles of the molded body 6 are formed by the cross section derived from the reinforcing fiber A.

The size of the molded body of the present embodiment can be appropriately set according to the application, but a volume of the molded body is preferably 0.1 cm³ or more, more preferably 1 cm³ or more, and preferably 10 cm³ or less, more preferably 5 cm³ or less.

A thickness of the thinnest portion of the molded body of the present embodiment is preferably 0.05 cm or more, more preferably 0.1 cm or more, and is preferably 10 cm or less, more preferably 5 cm or less, still more preferably 1 cm or less.

Next, details of the cutting step will be described.

As shown in FIG. 1(c), cutting is a step of cutting the heated-and-pressurized body 3, and an average value of the cutting angles at this time is preferably 3° or more, more preferably 4° or more, still more preferably 6° or more, even more preferably 8° or more, and further more preferably 10° or more with respect to the reference surface. By setting the average value of the cutting angles at or above a lower limit value, the pattern on the surface of the molded body can be formed more finely. The average value of the cutting angles with respect to the reference surface is preferably 40° or less, more preferably 38° or less, still more preferably 36° or less, even more preferably 34° or less, and further more preferably 32° or less. By setting the average value of the cutting angles at or below an upper limit value, the pattern on the surface of the molded body can be formed more vividly.

The average value of the cutting angles can be determined according to the description of the examples described later.

A cutting temperature is preferably 50°C or higher, more preferably 55°C or higher, still more preferably 60°C or higher, even more preferably 65°C or higher, and further more preferably 70°C or higher. By setting the cutting temperature at or above a lower limit value or more, surface accuracy can be improved without impairing cutting efficiency. The cutting temperature is preferably 100°C or lower, more preferably 95°C or lower, still more preferably 93°C or lower, even more preferably 91°C or lower, and further more preferably 88°C or lower. By setting the cutting temperature at or below an upper limit value or less, entanglement of the resin with a tool during cutting tends to be more effectively suppressed.

The cutting temperature here means a temperature after the temperature of a cut portion (portion of an actual blade and the like) of the cutting machine reaches a steady state. Therefore, a temperature at the time of initial heating and a temperature at the time of final cooling of the cutting machine are excluded.

The cutting is preferably performed in an atmosphere of from 10 to 45°C and a relative humidity of from 5 to 50% or less.

Next, details of the prepreg and the heated-and-pressurized body used in the present embodiment will be described. As the prepreg used in the present embodiment, a known prepreg can be used as long as it is a prepreg containing a resin and reinforcing fibers.

The prepreg in the present embodiment contains a resin.

The resin may be a thermoplastic resin, a thermosetting resin, or a mixture of both, and is preferably a thermoplastic resin. An example of an aspect of the resin of the prepreg in the present embodiment is an aspect in which a thermoplastic resin is included and 90 mass% or more of the resin is the thermoplastic resin. Another example of an aspect of the resin is an aspect in which the resin includes a thermosetting resin and 90 mass% or more of the resin is the thermosetting resin.

By using the thermoplastic resin (further, a crystalline thermoplastic resin), cutting tends to be possible at a higher temperature. When the thermosetting resin is used, a curing time is required, and a molding cycle tends to be long.

The resin preferably satisfies at least one of a melting point of 150°C or higher and 330°C or lower and a glass transition temperature of 100°C or higher. By setting the melting point and/or the glass transition temperature at or above a lower limit value or more, cutting tends to be further facilitated. In particular, when cutting is performed intensely, frictional heat is likely to occur; therefore, when the glass transition temperature is low, the resin becomes soft, and cutting processability may be poor.

By setting the melting point and/or the glass transition temperature at or below a the upper limit value or less, the moldability of the molded body of the heated-and-pressurized body tends to be further facilitated.

The melting point of the resin (usually thermoplastic resin) is preferably 150°C or higher, more preferably 180 or higher, and preferably 360°C or lower, more preferably 345°C or lower, still more preferably 330°C or lower, even more preferably 310°C or lower, further more preferably 290°C or lower, still further more preferably 270°C or lower, and particularly preferably 250°C or lower. In particular, by using a resin having a melting point (crystalline thermoplastic resin), cutting can be performed at a higher processing temperature.

The glass transition temperature of the resin is preferably 50°C or higher, more preferably 60°C or higher, and still more preferably 100°C or higher, and preferably 210°C or lower, more preferably 200°C or lower, still more preferably 190°C or lower, and even more preferably 185°C or lower.

The melting point (Tm) and the glass transition temperature (Tg) of the resin are values measured by differential scanning calorimetry (DSC) in accordance with ISO11357. In the measurement, using a differential scanning calorimeter, the resin is placed in a measuring pan of the differential scanning calorimeter, and the glass transition temperature (Tg) and the melting point (Tm) are determined by raising the temperature of a crystalline resin to the melting point plus 40°C and raising the temperature of an amorphous resin to the glass transition temperature plus 100°C at a heating rate of 10°C/min in a nitrogen atmosphere.

The differential scanning calorimeter used is "DSC-60" available from Shimadzu Corporation.

The thermoplastic resin is not particularly limited, and preferred examples thereof include a polyester resin such as a polyethylene terephthalate resin, a polytrimethylene terephthalate resin, and a polybutylene terephthalate resin; a polyamide resin; a polycarbonate resin; a styrene-based resin; a polyolefin resin such as a polyethylene resin, a polypropylene resin, and a cyclic cycloolefin resin; a polyacetal resin; a polyimide resin; a polyphenylene sulfide resin, a polyether ether ketone resin (PEEK), a polytetrafluoroethylene resin, a polyvinyl chloride resin, a polyetherimide resin; a polyurethane resin; a polyphenylene ether resin; a polysulfone resin; a polymethacrylate resin; and the like, at least one of a polyamide resin, a polycarbonate resin, a polyimide resin, and a polyether ether ketone resin is preferably included, and a polyamide resin is more preferably included.

The polyamide resin used in the present embodiments is not particularly limited in terms of its type, and may be an aliphatic polyamide resin or a semi-aromatic polyamide resin.

Examples of the aliphatic polyamide resin include polyamide 6, polyamide 11, polyamide 12, polyamide 46, polyamide 66, polyamide 610, polyamide 612, and polyamide 6/66, and polyamide 66 is preferable.

The polyamide resin used in the present embodiments preferably includes a semi-aromatic polyamide resin. The semi-aromatic polyamide resin refers to a polyamide resin composed of diamine-derived structural units and dicarboxylic acid-derived structural units, and from 20 to 80 mol% of the total structural units of the diamine-derived structural units and the dicarboxylic acid-derived structural units are structural units containing an aromatic ring. By using such a semi-aromatic polyamide resin, mechanical strength of the obtained molded body can be increased. Examples of the semi-aromatic polyamide resin include a terephthalic acid-based polyamide resin (polyamide 6T, polyamide 9T, and polyamide 10T) and a below-described xylylenediamine-based polyamide resin.

It is preferable that at least one type of the polyamide resin used in the present embodiment contains diamine-derived structural units and dicarboxylic acid-derived structural units, 70 mol% or higher of the diamine-derived structural units is derived from xylylenediamine, and 70 mol% or higher of the dicarboxylic acid-derived structural units is derived from an α,ω-linear aliphatic dicarboxylic acid having from 4 to 20 carbon atoms. Hereinafter, such a polyamide resin is sometimes referred to as a xylylenediamine-based polyamide resin.

Of the diamine-derived structural units of the xylylenediamine-based polyamide resin, more preferably 75 mol% or higher, still more preferably 80 mol% or higher, even more preferably 85 mol% or higher, further more preferably 90 mol% or higher, and still further more preferably 95 mol% or higher are derived from a xylylenediamine. Of the dicarboxylic acid-derived structural units of the xylylenediamine-based polyamide resin, more preferably 75 mol% or higher, still more preferably 80 mol% or higher, even more preferably 90 mol% or higher, and further more preferably 95 mol% or higher are derived from an α,ω-linear aliphatic dicarboxylic acid having from 4 to 20 carbon atoms.

Examples of a diamine that can be used as a raw material diamine component of the xylylenediamine-based polyamide resin, other than m-xylylenediamine and p-xylylenediamine, include an aliphatic diamine, such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine, and 2,4,4-trimethylhexamethylenediamine; an alicyclic diamine, such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and a diamine having an aromatic ring, such as bis(4-aminophenyl)ether, p-phenylenediamine, and bis(aminomethyl)naphthalene. One type, or a mixture of two or more types may be used.

Examples of the α,ω-linear aliphatic dicarboxylic acid having from 4 to 20 carbon atoms that is preferably used as the raw material dicarboxylic acid component of the xylylenediamine-based polyamide resin include an aliphatic dicarboxylic acid, such as succinic acid, glutaric acid, pimelic acid, suberic acid, azelaic acid, adipic acid, sebacic acid, undecanedioic acid, and dodecanedioic acid. Among these, one type, or a mixture of two or more types may be used, but adipic acid or sebacic acid is more preferable, and adipic acid is more preferable because a melting point of the polyamide resin is in an appropriate range for molding.

Examples of the dicarboxylic acid component other than the α,ω-linear aliphatic dicarboxylic acid having from 4 to 20 carbon atoms include a phthalic acid compound, such as isophthalic acid, terephthalic acid, and orthophthalic acid; and an isomer of naphthalenedicarboxylic acid, such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One type, or a mixture of two or more types may be used.

In the xylylenediamine-based polyamide resin in the present embodiment, it is preferable that from 0 to 100 mol% of the diamine-derived structural units is derived from p-xylylenediamine, and from 100 to 0 mol% is derived from m-xylylenediamine, it is more preferable that from 0 to 70 mol% is derived from p-xylylenediamine, and from 100 to 30 mol% is derived from m-xylylenediamine, it is still more preferable that from 0 to 50 mol% is derived from p-xylylenediamine, and from 100 to 50 mol% is derived from m-xylylenediamine, and it is even more preferable that from 0 to 20 mol% is derived from p-xylylenediamine, and from 100 to 80 mol% is derived from m-xylylenediamine.

The xylylenediamine-based polyamide resin in the present embodiment is preferably a polyamide resin in which 70 mol% or higher (preferably 80 mol% or higher, and more preferably 90 mol% or higher) of the dicarboxylic acid-derived structural units are derived from sebacic acid and/or adipic acid (preferably adipic acid).

Note that in any of the embodiments described above, a total of the diamine-derived structural units does not exceed 100 mol%, and a total of the dicarboxylic acid-derived structural units also does not exceed 100 mol%.

Note that the xylylenediamine-based polyamide resin includes the diamine-derived structural units and the dicarboxylic acid-derived structural units as main components, but structural units other than these are not entirely excluded. It goes without saying that the xylylenediamine-based polyamide resin may contain structural units derived from a lactam such as ε-caprolactam or laurolactam, or from an aliphatic aminocarboxylic acid such as aminocaproic acid or aminoundecanoic acid. As used herein, the term "main component" indicates that, of the structural units constituting the xylylenediamine-based polyamide resin, the total number of the diamine-derived structural units and the dicarboxylic acid-derived structural units is the largest among all the structural units. In the present embodiment, the total of the diamine-derived structural units and the dicarboxylic acid-derived structural units in the xylylenediamine-based polyamide resin preferably accounts for 90 mass% or more, more preferably 95 mass% or more, and still more preferably 98 mass% or more, of all the structural units.

As the thermosetting resin, an epoxy resin, a phenolic resin, a (meth)acrylate resin, an unsaturated polyester resin, a diallyl phthalate resin, a cyanate resin, and a maleimide resin, and an epoxy resin are preferred.

The prepreg used in the present embodiment may contain a resin additive without departing from the spirit of the present invention. Specific examples of the resin additive include an additive such as a coupling agent, a reactive diluent, a solvent, a reactive diluent other than a solvent, a curing accelerator, a humectant, a tackifier, an antifoamer, a delusterant, an anticorrosive, a lubricant, a colorant, a oxygen scavenger, an ultraviolet absorber, an antioxidant, a plasticizer, a dispersant, a flame retarder, an antistatic agent, a coloration inhibitor, and an antigelling agent. A total amount of these is preferably 10 mass% or less, more preferably 5 mass% or less, and particularly preferably 3 mass% or less of the resin. Usually, it is preferable that these resin additives are mixed with a resin and then impregnated into reinforcing fibers together with the resin.

The prepreg used in the present embodiment contains reinforcing fibers. The reinforcing fibers are preferably continuous reinforcing fibers.

Examples of a shape of the reinforcing fibers include flat plate-shaped reinforcing fibers referred to as sheets, tapes, and the like. Examples of the flat plate-shaped reinforcing fibers that can be used in the present embodiment include a unidirectional material (UD material), a woven fabric, a knitted fabric, a nonwoven fabric, and a tailored fiber placement processing material (a TFP material, which refers to a material subjected to tailored fiber placement processing), and it is preferable to include a TFP material and/or a woven fabric.

Examples of the woven fabric include twill weave, plain weave, sudare weave, and satin weave.

In the flat plate-shaped reinforcing fibers used in the present embodiment, the number of reinforcing fibers present per area of 1 inch ×1 inch is preferably 1 × 10⁸ or more, more preferably 1 × 10⁹ or more, and is preferably 2 × 10¹⁰ or less, more preferably 1.7 × 10¹⁰ or less. By increasing the number of reinforcing fibers, the proportion of reinforcing fibers on the surface of the molded body is increased, and a more complicated and beautiful pattern can be formed.

A mixed fiber yarn may be used in producing the above-described TFP material and/or the flat plate-shaped reinforcing fibers such as a woven fabric.

Examples of the mixed fiber yarn include a yarn containing a continuous thermoplastic resin fiber and a continuous reinforcing fiber and having a degree of dispersion of the continuous thermoplastic resin fiber and the continuous reinforcing fiber of 70% or more. By using such a mixed fiber yarn, a regular pattern can be more easily expressed.

Examples of the continuous thermoplastic resin fiber used in the mixed fiber yarn include those obtained by converting the thermoplastic resin used in the above-described prepreg into a fibrous form, and a preferred range of the resin is also the same. The continuous thermoplastic resin fiber and the continuous reinforcing fiber used for the mixed fiber yarn are preferably formed into a tape shape using a surface treatment agent and/or a sizing agent. Details of the mixed fiber yarn can be referred from disclosures in JP 2015-98669 A and WO 2020/050156, the contents of which are incorporated herein. The degree of dispersion of the mixed fiber yarn is measured according to a description in Paragraph [0073] of WO 2020/050156.

An average fiber length of the reinforcing fibers is not particularly limited, and from the viewpoint of molding processability, the average fiber length is preferably 1 cm or more, more preferably 3 cm or more, and still more preferably 1 m or less.

Examples of materials of the reinforcing fibers include inorganic fibers, such as glass fibers, carbon fibers, metal fibers, boron fibers, basalt fibers, and ceramic fibers; and organic fibers, such as aramid fibers, polyoxymethylene fibers, aromatic polyamide fibers, polypphenylene benzobisoxazole fibers, and ultra-high molecular weight polyethylene fibers. Among these, inorganic fibers are preferable from the viewpoint of achieving high strength, and at least one type selected from the group consisting of glass fibers, carbon fibers, and basalt fibers is more preferable due to lightweight, high strength and a high elastic modulus of the fibers, and carbon fibers are even more preferable.

Examples of the carbon fibers include polyacrylonitrile-based carbon fibers and pitch-based carbon fibers. In addition, carbon fibers made from plant-based raw materials such as lignin and cellulose can also be used.

The reinforcing fibers used in the present embodiment may be treated with a treatment agent. Examples of the treatment agent include a surface treatment agent or a sizing agent.

The surface treatment agent is preferably a silane coupling agent. Examples of the silane coupling agent include a silane coupling agent having a vinyl group, a silane coupling agent having an amino group, a silane coupling agent having an epoxy group, a silane coupling agent having a (meth)acrylic group, and a silane coupling agent having a mercapto group.

Examples of the sizing agent include an urethane-based sizing agent, an epoxy-based sizing agent, an acrylic-based sizing agent, polyester-based sizing agents, vinyl ester-based sizing agents, polyolefin-based sizing agents, polyether-based sizing agents, and carboxylic acid-based sizing agents. Of these, one type of sizing agent can be used, or two or more types of sizing agents can be used in combination. Examples of combinations of two or more types of the sizing agents include urethane/epoxy-based sizing agents, urethane/acrylic-based sizing agents, and urethane/carboxylic acid-based sizing agents.

Among these, from the viewpoint of improving interfacial adhesiveness to the resin, the reinforcing fibers are preferably treated with one or more types of sizing agents selected from the group consisting of a urethane-based sizing agent, an epoxy-based sizing agent, and urethane/epoxy-based sizing agents, and are more preferably treated with an epoxy-based sizing agent.

A commercially available product can also be used as the reinforcing fibers. Examples of commercially available products of reinforcing fibers include Torayca yarn of the series "T300", "T300B", "T400HB", "T700SC", "T800SC", "T800HB", "T830HB", "T1000GB", "T100GC", "M35JB", "M40JB", "M46JB", "M50JB", "M55J", "M55JB", "M60JB", "M30SC", and "Z600", and Torayca Cloth of the series "CO6142", "CO6151B", "CO6343", "CO6343B", "CO6347B", "CO6644B", "CK6244C", "CK6273C", and "CK6261C", the "UT70" series, the "UM46" series, and the "BT70" series, available from Toray Industries, Inc.

A proportion of the reinforcing fibers in the prepreg used in the present embodiment is preferably 40 vol% or more, more preferably 42 vol% or more, still more preferably 43 vol% or more, even more preferably 44 vol% or more, and further more preferably 45 vol% or more. By setting the proportion of the reinforcing fibers at or above a lower limit value, it tends to be easy to achieve both excellent mechanical properties and maintenance of a preferable temperature during cutting. The proportion of the reinforcing fibers in the prepreg used in the present embodiment is preferably 80 vol% or less, more preferably 78 vol% or less, still more preferably 76 vol% or less, even more preferably 74 vol% or less, and further more preferably 72 vol% or less. When the proportion of the reinforcing fibers is at or below an upper limit value, a molded body having fewer voids is obtained, and detachment of the reinforcing fibers during cutting tends to be more effectively suppressed.

The prepreg used in the present embodiment may contain only one type of reinforcing fiber, or may contain two or more types of reinforcing fibers. When two or more types thereof are contained, a total amount thereof is preferably within the aforementioned ranges.

A total amount of the resin and the reinforcing fibers in the prepreg used in the present embodiment is preferably 90 mass% or more, more preferably 95 mass% or more, and still more preferably 99 mass% or more, and the upper limit thereof is 100 mass%.

In the present embodiment, a difference between a refractive index of the resin and a refractive index of the reinforcing fibers at a wavelength of 589 nm is preferably 0.05 or more, more preferably 0.06 or more, still more preferably 0.07 or more, even more preferably 0.08 or more, and further more preferably 0.1 or more. By setting the difference in refractive index at or above a lower limit value, a more vivid and beautiful pattern can be expressed. The difference in refractive index is, for example, 1 or less, and may be 0.9 or less, 0.8 or less, 0.7 or less, or 0.6 or less.

The difference in refractive index is particularly effective when the resin is an amorphous resin.

The refractive index is measured according to JISK7142:2014.

The prepreg can be produced in accordance with a known method. For example, the prepreg can be produced by impregnating the reinforcing fibers (usually, a reinforcing fiber substrate) with a mixture of the resin and the resin additive added as necessary, and solidifying or semi-curing the resin.

The prepreg preferably contains as fewer voids as possible. By not including voids, a molded body having more excellent appearance can be obtained.

The heated-and-pressurized body according to the present embodiment is a molded body obtained by stacking 2 or more plies of the prepreg and heating and pressurizing the prepreg. The molded body of the present embodiment is usually molded by cutting such a heated-and-pressurized body.

A thickness of the heated-and-pressurized body is preferably 1 mm or more, more preferably 3 mm or more, still more preferably 5 mm or more, even more preferably 8 mm or more, and further more preferably 9 mm or more. By setting the thickness of the heated-and-pressurized body at or above a lower limit value, the cutting temperature tends to be easily stabilized. The thickness of the heated-and-pressurized body is preferably 30 mm or less, more preferably 25 mm or less, still more preferably 20 mm or less, even more preferably 18 mm or less, and further more preferably 16 mm or less. By setting the thickness of the heated-and-pressurized body at or below the upper limit value, a pattern excellent in appearance can be more easily expressed.

In the present embodiment, the thickness of the heated-and-pressurized body may be the same in all portions, or a thick portion or a thin portion may be partially provided. In the present embodiment, it is preferable that the thickness of a portion of the heated-and-pressurized body having the largest volume of a portion to be cut in the heated-and-pressurized body is within the above range.

The molded body of the present embodiment may include an additional film, and a part of the additional film may be present on the surface of the molded body. Examples of the additional film include a metal film C and/or a colored resin layer D. By providing such an additional film, the design of the molded body can be further enhanced. As described above, the additional film is sandwiched between the prepregs to form a heated-and-pressurized body, and thus to design can be imparted to the surface by cutting.

An example of the metal film C is a gold foil.

A colored resin film D may be formed into a film shape by mixing a dye and/or a pigment with a resin, or may be formed by coloring a resin film using a dye and/or a pigment. A glass transition temperature of the colored resin film D is preferably a glass transition temperature of the resin contained in the prepreg plus or minus 20°C.

As a resin used for the colored resin film D, a polyester resin, a polycarbonate resin, and an acrylic resin, and a polyester resin are preferable.

A thickness of the additional film is not particularly limited, and is preferably 10 µm or more and 10 µm or less.

When the additional film is provided, the number of additional films is preferably 1 or less for 2 plies of prepreg, and preferably 1 or less for three prepregs.

Since the molded body of the present embodiment is excellent in design and can be a resin molded body that is lightweight and excellent in strength, the molded body can be used for various decorative articles, automobile interiors, aircraft interiors, portable electrical and electronic devices, wearable electrical and electronic devices, accessories, watches, glasses, shoes, bags, cases, helmets, kitchen utensils, furniture, and the like.

### Examples

Hereinafter, the present invention will be described more specifically with reference to Examples. Materials, amounts used, proportions, processing details, and processing procedures described in the following Examples can be appropriately changed without departing from the spirit of the present invention. Thus, the scope of the present invention is not limited to the specific examples described below.

If it is difficult to obtain a measuring instrument or the like used in Examples due to discontinuation or the like, another instrument with equivalent performance can be used for the measurement.

### Raw material

Thermoplastic resin 1: polyamide resin (MXD6) synthesized from m-xylylenediamine and adipic acid, available from MITSUBISHI GAS CHEMICAL COMPANY, INC., product number: 6001, melting point: 237°C, glass transition temperature: 85°C, refractive index at wavelength of 589 nm: 1.58

Thermoplastic resin 2: polycarbonate resin, available from Mitsubishi Engineering-Plastics Corporation, product number: S-3000FN, glass transition temperature: 146°C, refractive index at wavelength of 589 nm: 1.59

Thermoplastic resin 3: thermoplastic polyimide resin (TPI), a thermoplastic polyimide resin synthesized according to a description in Example 1 in paragraph [0128] of WO 2016/147996. Physical properties of the obtained resin were as follows. Melting point: 323°C, glass transition temperature: 185°C, refractive index at wavelength of 589 nm: 1.52

Thermoplastic resin 4: polyether ether ketone (PEEK), available from Victrex plc., product number: 150G, melting point: 343°C, refractive index at wavelength of 589 nm: 1.53

Thermosetting resin 1: epoxy resin, available from Nitto Denko Corporation, product number: NT-8500P, glass transition temperature: 130°C, refractive index at wavelength of 589 nm: 1.56

Reinforcing fiber 1 (for producing CF1 and TFP tows): carbon fiber, available from Toyo Rayon Co., Ltd., product number: T700SC-12000, refractive index at wavelength of 589 nm: 2.01

Reinforcing fiber 2 (CF2, twill weave): carbon fiber, available from Toyo Rayon Co., Ltd., product number: CO6347B 3K, refractive index at wavelength of 589 nm: 2.01

Reinforcing fiber 3 (CF3, cord weave): carbon fiber, available from Mitsubishi Chemical Corporation, product number: TRK979PQRW, refractive index at wavelength of 589 nm: 2.01

Colored resin film 1: polyester film adhesive tape, available from Teraoka Seisakusho Co., Ltd., product number: No. 631 S #25 red

The average cross-sectional area a2 of the reinforcing fibers was determined by measuring the cross-sectional areas at 100 points in the cross section of the reinforcing fibers, and averaging the cross-sectional areas excluding the values of the top 10% and the bottom 10%. The unit was indicated in µm².

### Example 1

### <Production of substrate prepreg (reinforcing fiber substrate (TFP))>

Using the thermoplastic resin 1 and the reinforcing fiber 1, a mixed fiber yarn was prepared so that Vf was 46% according to the description in paragraphs 0089 and 0090 of JP 2015-98669 A.

The thermoplastic resin 1 was melt-extruded to prepare a film having a thickness of 50 µm. The mixed fiber yarns obtained as described above were aligned and arranged in one direction on the film using a Tailored Fiber Placement apparatus (available from TISM Co., Ltd.) to obtain a prepreg. A multifilament of the thermoplastic resin 1 obtained by the method described in paragraph 0089 of JP 2015-98669 A was used as a stop yarn at the time of arrangement.

### <Production of molded body of heated-and-pressurized body>

The prepregs obtained as described above were alternately stacked at 0°/90° so as to reach a desired thickness, and hot-press molded in a mold to produce a heated-and-pressurized body before cutting. As press conditions, the thermoplastic resin 1 was molded at a maximum temperature of 260°C and a press pressure of 3.0 MPa, the thermoplastic resin 2 was molded at a maximum temperature of 280°C and a press pressure of 3.0 MPa, the thermoplastic resin 3 was molded at 345°C and a press pressure of 3.0 MPa, the thermoplastic resin 4 was molded at 380°C and a press pressure of 3.0 MPa, and the thermosetting resin 1 was molded at 130°C and a pressure of 0.1 MPa. Here, 0° means the direction of warps.

### <Cutting method>

Cutting was performed on the heated-and-pressurized body obtained as described above at a cutting angle and a cutting temperature shown in Table 1 or Table 2 using a five-axis processing machine (available from Hitachi Seiko Ltd., product number: 2MF-V) as a cutting machine. The cutting machine was used in an atmosphere of 23°C and a relative humidity of 30%. A total cutting area was 2500 mm², and a rotation speed of the five-axis processing machine was 645 rpm.

A cutting angle θ was set as shown in Table 1 for the five-axis processing machine.

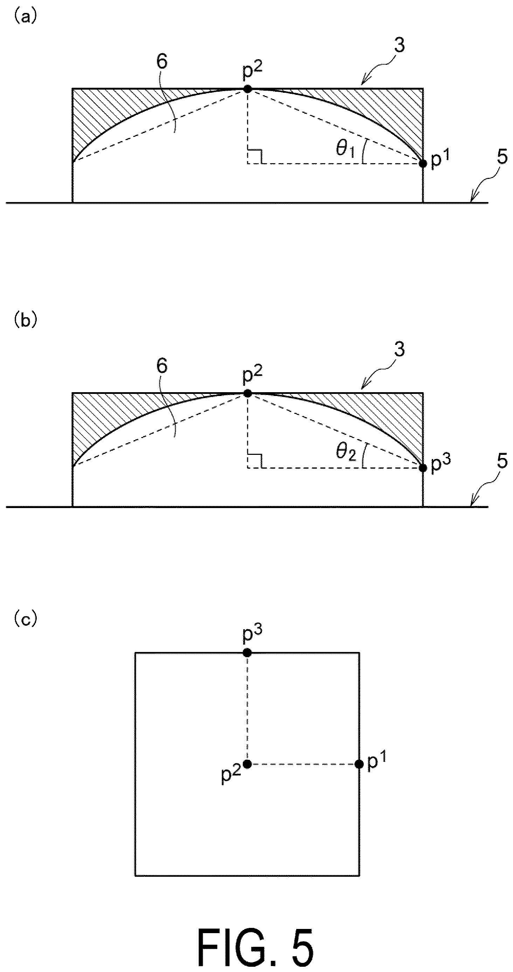

FIG. 5 shows a schematic view for explaining the definition of the cutting angle θ. FIG. 5(a) is a view of the heated-and-pressurized body 3 as viewed from a side when the reference surface 5 (table surface) is positioned downward. FIG. 5(b) is a view of the heated-and-pressurized body 3 changed in direction by 90° from FIG. 5(a) when the reference surface 5 is positioned downward. FIG. 5(c) is a view of the heated-and-pressurized body 3 as viewed from directly above (as viewed from a direction facing the reference surface). In FIG. 5, a hatched portion of the heated-and-pressurized body 3 is a portion to be cut, and the other remaining portion is a portion remaining as the molded body 6. θ₁ and θ₂ were calculated based on points p¹, p², and p³ in FIGS. 5(a) to 5(c), and an average value was taken as the cutting angle θ.

### <Measurement of proportion of region B>

For the surface of the obtained molded body after cutting, the cross-sectional area of the reinforcing fiber observed on the surface was measured. In the measurement, the cross-sectional area of 100 reinforcing fibers was measured for each surface area of 10000 µm² of the molded body.

A region where 50% or more of the measured cross-sectional area a1 of the reinforcing fibers was larger than the average cross-sectional area a2 of the reinforcing fibers was defined as the region B. The average value of the cross-sectional area a1 in the region B was calculated.

In addition, a ratio of the area of the region B to the surface area of the molded body was calculated (unit:%).

### <Design>

The cut surface of the obtained molded body was visually evaluated for the design. In the evaluation, clarity and sophistication of a pattern were comprehensively evaluated, and Example 8 was determined as B (standard), a pattern that was clearer and more sophisticated than Example 8 was evaluated as A, and a pattern that was less clear and less sophisticated than Example 8 was evaluated as C. When there was no pattern, it was evaluated as D. The evaluation was performed by ten experts, and the judgment was made by majority decision.

### <Processability>

The ease of processing at the time of cutting was evaluated.
A: Good
B: Other than A above and C (although processing can be performed, the resin is easily entangled with an end mill, and the like)
C: Processing was impossible

### <Molding Cycle>

The time required for cutting was measured. The shorter the time required for cutting, the better the molding cycle.
A: less than 1 hour
B: 1 hour or more and less than 3 hours
C: 3 hours or more

### Example 2

Using the thermoplastic resin shown in Table 1, a film shown in Table 1 was obtained at a melting point plus 30°C using an extruder. The film was stacked with the reinforcing fibers 2, one colored resin film 1 was sandwiched every 5 plies, and hot press molding was performed to obtain a prepreg. The other processes were conducted in the same way as in Example 1.

### Example 3

Using the thermoplastic resin shown in Table 1, a film shown in Table 1 was obtained at a melting point plus 30°C using an extruder. The film was stacked with the reinforcing fibers 3, one colored resin film 1 was sandwiched every 5 plies, and hot press molding was performed to obtain a prepreg. The other processes were conducted in the same way as in Example 1.

### Example 4

The processes were conducted in the same way as in Example 1 except that the conditions shown in Table 1 were changed.

### Example 5

The processes were conducted in the same way as in Example 1 except that the conditions shown in Table 1 were changed.

### Example 6

The processes were conducted in the same way as in Example 1 except that the conditions shown in Table 2 were changed.

### Example 7

An appropriate amount of the thermosetting resin 1 was impregnated into the reinforcing fibers 2 at 40°C by a hand lay-up method to obtain a prepreg. The processes were conducted in the same way as in Example 1 except that the obtained prepreg was used, and the conditions shown in Table 2 were changed.

### Example 8

The processes were conducted in the same way as in Example 1 except that the conditions shown in Table 2 were changed.

### Example 9

The processes were conducted in the same way as in Example 1 except that the conditions shown in Table 2 were changed.

### Comparative Example 1

A mold capable of directly molding the resulting molded body in Example 1 was prepared. The prepreg was cut out and placed in accordance with the dimensions of the mold, and molded at 260°C and a press pressure of 3.0 MPa. A molded body having a target shape was obtained without performing cutting.

The average value of the cross-sectional area a1 in the region B is the proportion of the reinforcing fiber A at both ends of the heated-and-pressurized body.

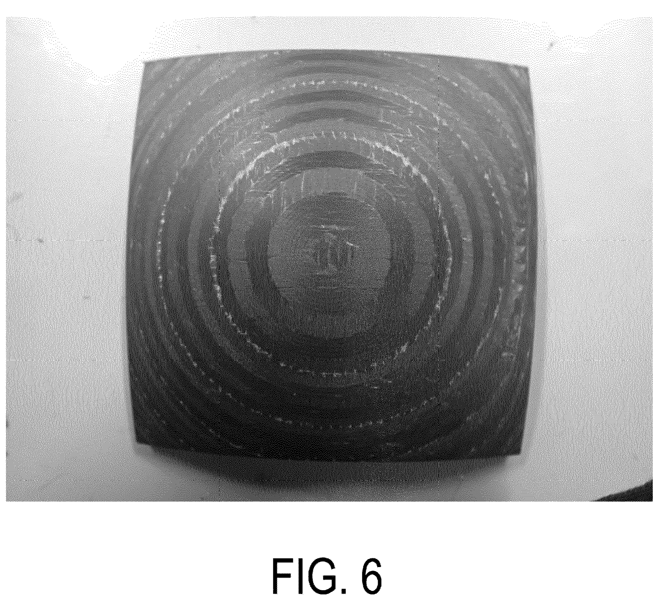

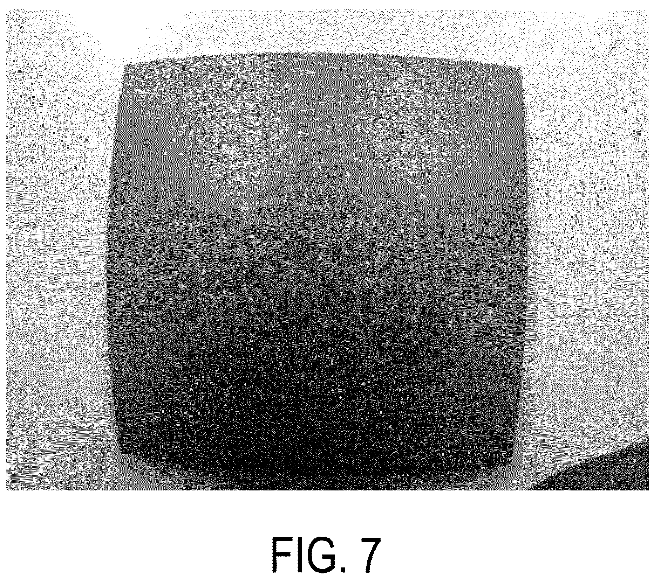

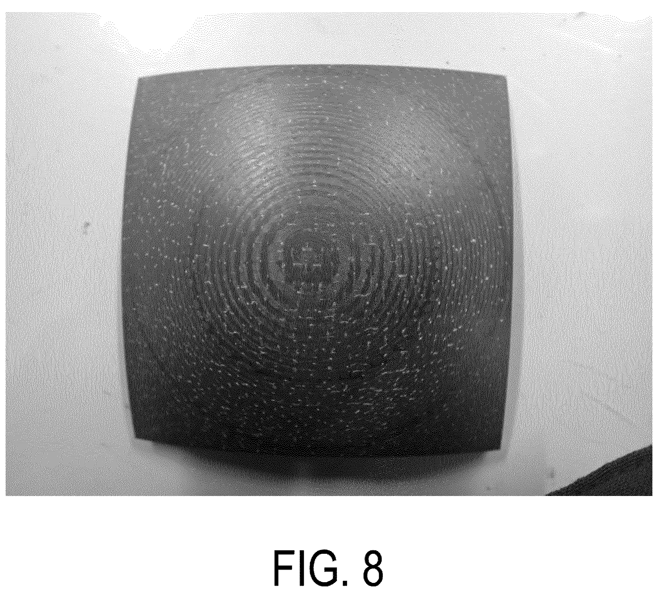

The results are presented in Tables 1 and 2 below. For Examples 1 to 3, photographs after cutting are shown in FIGS. 6 to 8.

**[Table 1]**

| | Example 1 | Example 2 | Example 3 | Example 4 | Example 5 |
|---|---|---|---|---|---|
| Resin type | Thermoplastic resin 1 PA | Thermoplastic resin 1 PA | Thermoplastic resin 1 PA | Thermoplastic resin 2 PC | Thermoplastic resin 3 TPI |
| Type of reinforcing fibers | CF1 | CF2 | CF3 | CF2 | CF2 |
| Reinforcing fiber substrate | TFP | Twill weave | Sudare weave | Twill weave | Twill weave |
| Average value (µm²) of cross-sectional area al in region B | 62 | 60 | 61 | 60 | 60 |
| Average cross-sectional area a2 (µm²) of reinforcing fibers | 0 | 0 | 0 | 0 | 0 |
| Proportion (vol%) of reinforcing fiber in prepreg | 45 | 45 | 45 | 45 | 45 |
| Thickness (mm) of heated-and-pressurized body | 10 | 10 | 10 | 10 | 10 |
| Average value of cutting angle (°) | 11 | 11 | 11 | 11 | 11 |
| Cutting temperature (°C) | 80 | 80 | 80 | 85 | 80 |
| Proportion (%) of region B | 48 | 48 | 48 | 48 | 48 |

| | | | | | |
|---|---|---|---|---|---|
| Design | A | A | A | A | A |
| Processability | A | A | A | A | A |
| Molding cycle | A | A | A | A | B |

**[Table 2]**

| | Example 6 | Example 7 | Example 8 | Example 9 | Comparative Example 1 |
|---|---|---|---|---|---|
| Resin type | Thermoplastic resin 4 PEEK | Thermosetting resin 1 | Thermoplastic resin 1 PA | Thermoplastic resin 1 PA | Thermoplastic resin 1 PA |
| Type of reinforcing fibers | CF2 | CF2 | CF2 | CF2 | CF2 |
| Reinforcing fiber substrate | Twill weave | Twill weave | Twill weave | Twill weave | Twill weave |
| Average value (µm²) of cross-sectional area a1 in region B | 60 | 60 | 54 | 75 | 50 |
| Average cross-sectional area a2 (µm²) of reinforcing fibers | 0 | 0 | 0 | 0 | 0 |
| Proportion (vol%) of reinforcing fiber in prepreg | 45 | 45 | 45 | 45 | 45 |
| Thickness (mm) of heated-and-pressurized body | 10 | 10 | 15 | 7 | - |
| Average value of cutting angle (°) | 11 | 11 | 22 | 5 | - |
| Cutting temperature (°C) | 80 | 80 | 74 | 82 | Molding with mold |
| Proportion (%) of region B | 48 | 48 | 65 | 27 | 0 |

| | | | | | |
|---|---|---|---|---|---|
| Design | A | A | B | C | D |
| Processability | A | B | A | B | - |
| Molding cycle | C | B | A | A | A |

As is apparent from the above results, in the present invention, a molded body containing a resin and reinforcing fibers and having excellent design and a smooth surface was obtained. The present invention also excelled in processability. In addition, the present invention also excelled in molding cycle.

### Reference Signs List

1 Prepreg
2 Additional film
3 Heated-and-pressurized body
4 Cutting machine
5 Reference surface
6 Molded body

## Claims

1. A molded body of a prepreg comprising:
a resin; and
reinforcing fibers,
wherein the molded body includes a region B, 50% or more of the region B being occupied by a reinforcing fiber A, the reinforcing fiber A being one of the reinforcing fibers and having a cross section present on a surface of the molded body, when a cross-sectional area a1 of the reinforcing fiber A on the surface of the molded body and an average cross-sectional area a2 of the reinforcing fiber A are compared, the reinforcing fiber A satisfying a1 > a2, and the region B occupies 10% or more of a surface area of the molded body.

2. The molded body according to claim 1, wherein the resin includes a thermoplastic resin.

3. The molded body according to claim 1 or 2, wherein the resin satisfies at least one of a melting point of 150°C or higher and 330°C or lower, and a glass transition temperature of 100°C or higher.

4. The molded body according to any one of claims 1 to 3, further comprising a metal film C, wherein a part of the metal film C is present on the surface of the molded body.

5. The molded body according to any one of claims 1 to 4, further comprising a colored resin film D, wherein a part of the colored resin film D is present on the surface of the molded body.

6. The molded body according to any one of claims 1 to 5, wherein a proportion of the reinforcing fibers in the prepreg is from 40 to 80 vol%.

7. The molded body according to any one of claims 1 to 6, wherein a difference between a refractive index of the resin and a refractive index of the reinforcing fiber at a wavelength of 589 nm is 0.05 or more.

8. The molded body according to any one of claims 1 to 7, wherein a difference between the cross-sectional area a1 and the cross-sectional area a2 in the region B of the reinforcing fiber A is 5 µm² or more.

9. The molded body according to any one of claims 1 to 8, wherein the reinforcing fibers constituting the prepreg include a tailored fiber placement processing material and/or a woven fabric.

10. The molded body according to any one of claims 1 to 9, wherein the region B occupies from 20 to 80% of the surface area of the molded body.

11. A method for producing a molded body, the method comprising cutting a heated-and-pressurized body obtained by stacking 2 or more plies of a prepreg containing a resin and reinforcing fibers and heating and pressurizing the prepreg,
wherein the cutting is performed in such a way that the molded body includes a region B, 50% or more of the region B being occupied by a reinforcing fiber A, the reinforcing fibers A being one of the reinforcing fibers and having a cross section present on a surface of the molded body, when a cross-sectional area a1 of the reinforcing fiber A on the surface of the molded body and an average cross-sectional area a2 of the reinforcing fiber A are compared, the reinforcing fiber A satisfying a1 > a2, and the region B occupies 10% or more of a surface area of the molded body.

12. The method for producing a molded body according to claim 11, wherein the cutting is performed using a five-axis processing machine.

13. The method for producing a molded body according to claim 11 or 12, wherein a cutting angle θ at the time of performing the cutting is from 3 to 40° with respect to a reference surface.

14. The method for producing a molded body according to any one of claims 11 to 13,
wherein a cutting temperature at the time of performing the cutting is from 50 to 100°C.

15. The method for producing a molded body according to any one of claims 11 to 14, wherein the molded body is the molded body according to any one of claims 1 to 10.
